# FASCICULE DE BREVET EUROPEEN

(11) **EP 3 621 137 B1**
(45) Date de publication et mention de la délivrance du brevet: **17.02.2021**
(21) Numéro de dépôt: 19195643.2
(22) Date de dépôt: 05.09.2019
(51) Int. Cl.: H01M 8/026, H01M 8/0265, H01M 8/0206, H01M 8/0228, H01M 8/0254, H01M 8/1018

(54) **SÉPARATEUR POUR PILE À COMBUSTIBLE À DISTRIBUTION DE GAZ RÉACTIF HOMOGENÉISÉE**
SEPARATOR FÜR BRENNSTOFFZELLE MIT HOMOGENER GASVERTEILUNG
SEPARATOR FOR FUEL CELL HAVING HOMOGENIZED GAS DISTRIBUTION

(30) Priorité: 07.09.2018 FR 1858053
(43) Date de publication de la demande: 11.03.2020
(73) Titulaire: Commissariat à l'Énergie Atomique et aux Énergies Alternatives, 75015 Paris (FR)
(72) Inventeur: MORIN, Arnaud, 38054 Grenoble cedex 9 (FR); POIROT-CROUVEZIER, Jean-Philippe, 38054 Grenoble cedex 9 (FR)
(74) Mandataire: INNOV-GROUP

(56) Documents cités:
- EP-A1- 3 223 351
- DE-A1-102005 002 924
- US-A1- 2004 112 740
- US-A1- 2013 316 263

## Description

### DOMAINE TECHNIQUE

Le domaine de l'invention est celui des piles à combustible comportant au moins une cellule électrochimique comprenant un assemblage membrane électrodes. L'invention porte plus particulièrement sur les plaques de maintien d'une telle cellule électrochimique.

### ÉTAT DE LA TECHNIQUE ANTÉRIEURE

Une pile à combustible comporte habituellement au moins une cellule électrochimique dont l'anode et la cathode sont séparées électriquement l'une de l'autre par une membrane électrolytique, la cellule étant le lieu de réactions électrochimiques entre des réactifs introduits de manière continue. L'empilement des électrodes et de la membrane électrolytique est appelé assemblage membrane électrodes (AME). D'une manière générale, le combustible (par exemple de l'hydrogène) est apporté jusqu'à l'anode alors que le comburant (par exemple de l'oxygène contenu dans l'air) est amené à la cathode. La réaction électrochimique est subdivisée en deux demi-réactions, une réaction d'oxydation et une réaction de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte contenu dans une membrane polymère, et un conducteur électronique formé par le circuit électrique externe. La cellule est ainsi le lieu de la réaction électrochimique : les gaz réactifs y sont apportés, les produits et les espèces non réactives en sont évacués, ainsi que la chaleur produite lors de la réaction.

La cellule électrochimique comporte deux plaques de maintien, entre lesquelles est disposé l'assemblage membrane électrodes. Les plaques de maintien sont appelées plaques bipolaires lorsque, dans un empilement de cellules électrochimiques, elles sont chacune au contact de l'anode d'une cellule, sur une face, et de la cathode de la cellule adjacente, sur l'autre face. Elles sont adaptées à assurer le maintien mécanique de l'assemblage membrane électrodes, la distribution fluidique des gaz réactifs au niveau des électrodes, et la connexion électrique de ces dernières. Aussi, les plaques de maintien comportent habituellement une face anodique au niveau de laquelle est formé un circuit de distribution du carburant, et une face cathodique, opposée à la face anodique, au niveau de laquelle est formé un circuit de distribution du comburant. Chaque circuit de distribution prend la forme d'un réseau de canaux agencés dans le plan de la plaque bipolaire pour amener le gaz réactif à l'électrode correspondante. Les plaques bipolaires peuvent également comporter un circuit de refroidissement formé d'un réseau de conduits internes qui assurent l'écoulement d'un fluide caloporteur permettant d'évacuer la chaleur produite lors de la réaction par la cellule.

Chaque plaque bipolaire peut être formée de deux tôles électriquement conductrices accolées l'une à l'autre. Elles présentent des reliefs formant les canaux de distribution destinés à approvisionner les électrodes en gaz réactifs. Des exemples de tels canaux de distribution sont décrits dans US 2013/316263A1, EP 3223351A1, et dans l'article de Li & Sabit, intitulé Review of bipolar plates in PEM fuel cells: Flow-field designs, Int. J. Hydrog. Energy 30 (2005) 359-371. D'autres technologies existent, comme par exemple les plaques bipolaires réalisées en matériau composite dont les reliefs formant les canaux de distribution sont réalisés par moulage. Comme le montre l'article de Li & Sabit 2005, les canaux de distribution peuvent s'étendre en regard des électrodes de différentes manières, par exemple en serpentin ou de manière rectiligne, voire de manière interdigitée.

On cherche habituellement à préserver ou augmenter la durée de vie des cellules électrochimiques, par exemple en tendant à améliorer l'uniformité de la distribution spatiale des gaz réactifs amenés aux électrodes par les plaques de maintien. Il existe ainsi un besoin de disposer de plaques de maintien de pile à combustible permettant de rendre davantage homogène l'approvisionnement local des espèces réactives aux électrodes.

### EXPOSÉ DE L'INVENTION

L'invention a pour objectif de remédier au moins en partie aux inconvénients de l'art antérieur, et plus particulièrement de proposer une plaque de maintien de pile à combustible permettant d'améliorer l'homogénéité de la distribution spatiale des gaz réactifs à une électrode d'une cellule électrochimique.

Pour cela, l'objet de l'invention est une plaque de maintien d'une pile à combustible, destinée à maintenir un assemblage membrane électrodes d'une cellule électrochimique dont les électrodes comportent une couche de diffusion, comportant un réseau de canaux de distribution, situé à une face de la plaque de maintien destinée à être au contact de la couche de diffusion de l'une des électrodes, et destiné à distribuer un gaz réactif à ladite électrode, les canaux de distribution étant séparés deux à deux par une nervure de séparation destinée à être au contact de ladite couche de diffusion.

Selon l'invention, dans au moins une partie longitudinale du réseau de distribution, la plaque de maintien comporte une pluralité d'éléments d'obstruction partielle, distincts les uns des autres, situés dans chacun des canaux de distribution du réseau de distribution, adaptés à y induire une diminution locale d'une section de passage de gaz réactif, et disposés longitudinalement de manière sensiblement périodique. De plus, les éléments d'obstruction partielle de chaque canal de distribution sont agencés de manière à présenter un décalage longitudinal avec ceux des canaux de distribution adjacents.

De plus, dans au moins ladite partie longitudinale du réseau de distribution, les nervures de séparation comportent chacune une pluralité de décrochements transversaux distincts les uns des autres et agencés de manière à présenter un décalage longitudinal avec les éléments d'obstruction partielle des canaux de distribution adjacents.

Certains aspects préférés mais non limitatifs de cette plaque de maintien sont les suivants.

Les éléments d'obstruction partielle peuvent être des bossages formés dans une surface de fond des canaux de distribution, ou des inserts placés dans les canaux de distribution.

Les éléments d'obstruction partielle de chaque canal de distribution peuvent être agencés de manière à être en opposition de phase avec ceux des canaux de distribution adjacents.

Les éléments d'obstruction partielle des canaux de distribution peuvent induire chacun une perte de charge singulière, et peuvent être dimensionnés pour induire une même perte de charge totale pour chacun des canaux de distribution.

Au moins un premier élément d'obstruction partielle d'un canal de distribution de rang i, situé à une entrée du canal de distribution destinée à recevoir le gaz réactif, peut présenter une première perte de charge singulière différente des pertes de charges singulières induites par des autres éléments avals d'obstruction partielle du même canal de distribution.

Au moins un dernier élément d'obstruction partielle des canaux de distribution de rang i-1 et i+1, adjacents au canal de distribution de rang i, situé à une sortie desdits canaux de distribution de rang i-1 et i+1, peut présenter une dernière perte de charge singulière sensiblement égale à ladite première perte de charge singulière.

Le réseau de distribution peut comporter plusieurs parties longitudinales distinctes les unes des autres, disposées longitudinalement à la suite les unes des autres, qui diffèrent entre elles par la valeur de la période d'agencement longitudinal des éléments d'obstruction partielle, d'une section réduite de passage fluidique au niveau des éléments d'obstruction partielle, et/ou du décalage longitudinal entre les éléments d'obstruction partielle des canaux de distribution adjacents.

La plaque de maintien peut être formée de deux tôles électriquement conductrices d'une épaisseur sensiblement constante, dont les canaux de distribution peuvent être formés par des bossages des tôles conductrices, les canaux de distribution comportant chacun une paroi longitudinale de fond reliée aux nervures de séparation par des parois latérales.

La paroi longitudinale de fond des canaux de distribution peut comporter des portions planes séparées longitudinalement les unes des autres par des bossages formant des éléments d'obstruction partielle. Alternativement, la paroi longitudinale de fond peut s'étendre longitudinalement de manière courbe de manière à former des oscillations continues périodiques définissant les éléments d'obstruction partielle.

Les décrochements transversaux d'une même nervure de séparation peuvent être agencés longitudinalement de manière sensiblement périodique, de préférence à la moitié de la période d'agencement longitudinal des éléments d'obstruction partielle d'un même canal de distribution.

Les décrochements transversaux peuvent être formés d'une surface de fond reliée à une surface longitudinale sensiblement plane par des parois latérales, la surface de fond s'étendant suivant un axe sensiblement orthogonal à l'axe longitudinal de la nervure de séparation.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A est une vue en coupe transversale, schématique et partielle, d'une cellule électrochimique selon un exemple de l'art antérieur, illustrant la migration par diffusion des gaz réactifs à l'électrode ; et la figure 1B est une vue en perspective d'une plaque de maintien illustrée sur la fig.iA ;
la figure 2 est une vue en perspective d'une partie d'une plaque de maintien selon un premier mode de réalisation, comportant des éléments d'obstruction partielle des canaux de distribution ;
la figure 3A illustre un exemple de profils longitudinaux de pression dans deux canaux de distribution adjacents ainsi que le profil longitudinal de la différence de pression transversale locale qui en résulte ; et la figure 3B est une vue en coupe transversale, schématique et partielle, d'une cellule électrochimique comportant la plaque de maintien illustrée sur la fig.2, suivant le plan de coupe A-A ;
la figure 4 illustre un autre exemple de profils longitudinaux de pression dans deux canaux de distribution adjacents ainsi que le profil longitudinal de la différence de pression transversale locale qui en résulte ;
les figures 5A et 5B sont des vues schématiques et partielles, en coupe longitudinale (fig.5A) et en perspective (fig.5B) de deux variantes de plaque de maintien selon le premier mode de réalisation ;
la figure 6 est une vue de dessus d'une plaque de maintien selon un autre mode de réalisation, comportant plusieurs parties distinctes dites d'intérêt ;
les figures 7A et 7B sont des vues en perspective (fig.7A) et en coupe longitudinale (fig.7B) d'une partie d'une plaque de maintien selon un deuxième mode de réalisation, comportant en outre des décrochements transversaux au niveau des nervures de séparation.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, sauf indication contraire, l'expression « comportant un » doit être comprise comme « comportant au moins un » et non pas comme « comportant un unique... ».

L'invention porte sur une plaque de maintien d'une pile à combustible. On décrira différents modes de réalisation et variantes en référence à une pile à combustible, et en particulier à une pile à hydrogène de type PEM (pour *Proton Exchange Membrane,* en anglais) dont la cathode est alimentée en oxygène et l'anode en hydrogène. L'invention s'applique cependant à tout type de pile à combustible, en particulier à celles fonctionnant à basse température, c'est-à-dire à une température inférieure à 200°C.

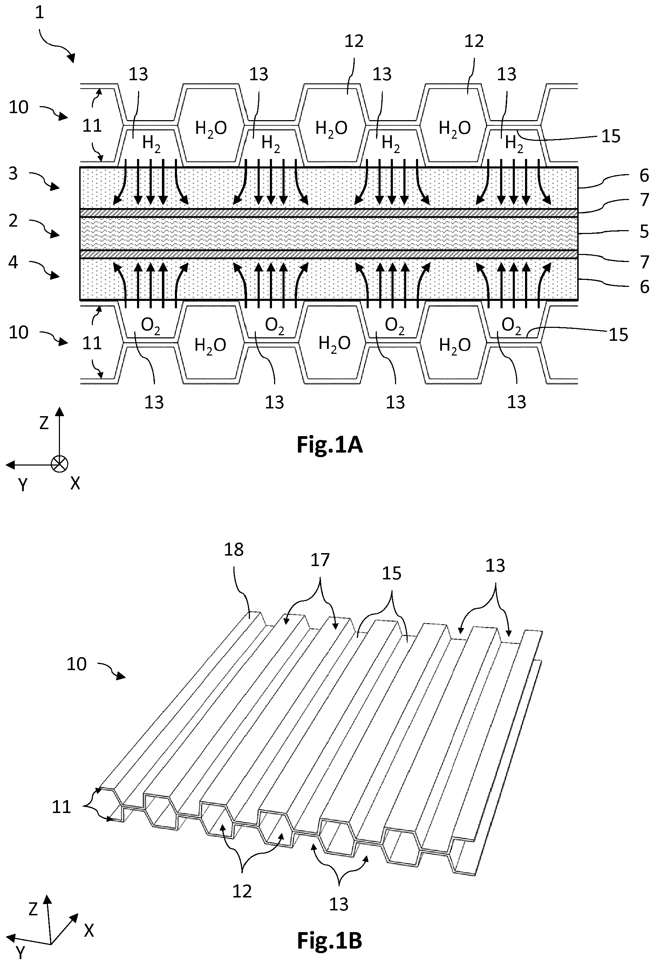

La figure 1A est une vue partielle et schématique, en coupe transversale, d'un exemple de cellule électrochimique 1 d'une pile à combustible de type PEM selon un exemple de l'art antérieur. La figure 1B est une vue partielle et schématique, en perspective, d'une plaque de maintien illustrée sur la fig.iA réalisée ici selon la technologie des tôles conductrices embouties.

On définit ici et pour la suite de la description un repère orthonormé direct (X, Y, Z), où le plan XY s'étend de manière parallèle au plan de la cellule électrochimique 1, et où l'axe Z est orienté suivant la dimension d'épaisseur des plaques de maintien 10.

Les cellules électrochimiques appartiennent ici à un empilement (non représenté) de cellules d'une pile à combustible. Chaque cellule électrochimique 1 comporte un assemblage 2 membrane/électrodes formé d'une anode 3 et d'une cathode 4 séparées l'une de l'autre par un électrolyte comprenant ici une membrane polymère 5. Les assemblages 2 membrane/électrodes des cellules électrochimiques sont disposés entre des plaques de maintien 10, appelées ici plaques bipolaires, adaptées à amener des gaz réactifs aux électrodes 3, 4 et à évacuer la chaleur produite lors de la réaction électrochimique.

De manière connue en soi, chaque électrode 3, 4 comporte une couche de diffusion 6 (GDL, pour *Gas Diffusion Layer,* en anglais), disposée au contact d'une plaque bipolaire 10, et une couche active 7 située entre la membrane électrolytique 5 et la couche de diffusion 6. Les couches actives 7 sont le lieu des réactions électrochimiques. Elles comportent des matériaux permettant les réactions d'oxydation et de réduction aux interfaces respectives de l'anode 3 et la cathode 4 avec la membrane électrolytique 5. Plus précisément, elles peuvent comporter un catalyseur, par exemple des particules de platine, disposé sur un support électriquement conducteur, par exemple une matrice carbonée, et un ionomère assurant la conductivité protonique, par exemple du Nafion. Les couches de diffusion 6 sont réalisées en matériau poreux autorisant la diffusion des gaz réactifs à partir de canaux de distribution 13 des plaques bipolaires 10 jusqu'aux couches actives 7, ainsi que la diffusion des produits issus de la réaction électrochimique jusqu'aux mêmes canaux de distribution 13.

Chaque plaque bipolaire 10 est formée de deux tôles conductrices 11 accolées et assemblées l'une à l'autre, ces tôles conductrices 11 étant embouties de manière à former des réseaux de distribution de gaz réactifs au niveau des électrodes 3, 4 de chacune des cellules électrochimiques, et un réseau de refroidissement 12 situé entre les tôles conductrices 11. Ainsi, une première tôle conductrice 11, dite anodique, est destinée à être au contact de l'anode 3 d'un assemblage 2 membrane/électrodes d'une cellule électrochimique 1, alors que la deuxième tôle conductrice 11, dite cathodique, est destinée à être au contact de la cathode 4 d'un assemblage 2 membrane/électrodes d'une cellule électrochimique 1 adjacente.

Chaque tôle conductrice 11 comporte une face externe et une face interne opposée, les tôles conductrices 11 étant accolées l'une à l'autre au niveau des faces internes. Une face externe est dite anodique lorsqu'elle est destinée à être au contact de l'anode 3 d'une cellule électrochimique 1, ou cathodique lorsqu'elle est destinée à être au contact de la cathode 4 de la cellule électrochimique 1 adjacente. La face anodique d'une tôle conductrice 11 comporte le réseau de distribution d'un gaz réactif, par exemple de l'hydrogène, et la face cathodique de l'autre tôle conductrice 11 comporte un réseau de distribution d'un autre gaz réactif, par exemple de l'air ou de l'oxygène.

Les tôles conductrices 11 se présentent sous forme de feuilles, ou de plaques élémentaires de faible épaisseur, réalisées en un matériau électriquement conducteur, par exemple un métal voire un matériau composite par exemple chargé en graphite. L'épaisseur peut être de l'ordre de quelques dizaines de microns à quelques centaines de microns dans le cas des tôles métalliques, par exemple de 50µm à 200µm environ.

Chaque tôle conductrice 11 comporte des reliefs obtenus par exemple par emboutissage ou mis en forme sous presse, dont la forme sur une face est le complémentaire de la forme sur la face opposée. Ces reliefs forment, au niveau des faces externes, les réseaux de distribution de gaz réactifs, et, au niveau des faces internes, un réseau de refroidissement 12 comportant des canaux dans lesquels un fluide caloporteur est destiné à s'écouler.

Chaque canal de distribution 13 est délimité par des parois latérales qui s'étendent sensiblement suivant l'axe Z de l'épaisseur de la plaque bipolaire 10, les parois latérales de chaque canal 13 étant reliées entre elles par une paroi de fond 15. Chaque canal de distribution 13 est séparé des canaux adjacents du même réseau de distribution par une paroi dite nervure de séparation 17 qui relie les parois latérales adjacentes de deux canaux de distribution 13 adjacents, cette nervure de séparation 17 étant destinée à venir au contact de l'électrode correspondante. Ainsi, les canaux de distribution 13 anodiques, resp. cathodiques, sont séparés deux à deux par une nervure de séparation 17 anodique, resp. cathodique. La nervure de séparation 17 est une paroi dont la surface longitudinale est de préférence au moins en partie sensiblement plane.

On peut définir une profondeur locale Pc(x) de canal de distribution 13 comme étant la dimension suivant l'axe Z entre la surface de la paroi de fond 15 du canal et un plan passant par la surface longitudinale 18 sensiblement plane des nervures de séparation 17 adjacentes. On peut également définir une largeur locale de nervure de séparation 17 comme étant la dimension de la nervure dans une section transversale. L'abscisse x indique ici la position suivant l'axe longitudinal X des canaux de distribution 13 par rapport à l'entrée des canaux.

Les plaques bipolaires illustrées sur les fig.iA et 1B sont du type tôles conductrices 11 embouties. D'autres technologies de plaque bipolaire 10 peuvent être utilisées, par exemple les plaques réalisées en matériau composite chargé par exemple de graphite, dont les reliefs sont réalisés par injection, dépôt, moulage ou usinage.

Comme l'illustre la fig.iA, lors du fonctionnement de la pile à combustible, les gaz réactifs sont distribués aux électrodes 3, 4 par les canaux de distribution 13, et migrent par diffusion au travers de la couche de diffusion 6 jusqu'à la couche active 7. Il apparaît alors que l'approvisionnement local des gaz réactifs présente des inhomogénéités spatiales. En effet, alors que les zones de la couche active 7 situées en regard des canaux de distribution 13 sont correctement alimentées en gaz réactifs, les zones situées en regard des nervures de séparation 17 présentent un déficit d'approvisionnement local en gaz réactifs. Il peut alors en résulter des inhomogénéités spatiales en température et en humidité de la membrane électrolytique 5, ces inhomogénéités étant susceptibles de provoquer une dégradation des propriétés mécaniques et/ou électrochimiques de la membrane 5 qui peut altérer sa durée de vie.

Selon l'invention, chacun des canaux de distribution 13 du réseau comporte une pluralité d'éléments d'obstruction partielle 20, distincts les uns des autres, formant ainsi des pertes de charge singulières (*local pressure losses,* en anglais) au sein du canal de distribution 13, c'est-à-dire des pertes de charge locales. D'une manière générale, une perte de charge singulière peut provenir d'une variation de la section de passage du fluide ou d'un changement d'orientation du canal (par exemple un coude). D'une manière générale, une perte de charge singulière ne présume pas du caractère laminaire ou turbulent de l'écoulement du gaz réactif dans le canal de distribution. Dans le cadre de l'invention, les éléments d'obstruction partielle 20 provoquent une diminution locale de la section de passage du fluide dans les canaux de distribution 13. Cela se traduit par le fait que le profil longitudinal de la pression dans un canal de distribution présente une diminution locale supplémentaire. Ainsi, comme décrit en détail plus loin, le profil longitudinal de pression présente une diminution entre l'entrée et la sortie définie par un terme de perte de charge linéaire (ou régulière) et des termes de pertes de charges singulières localisés au niveau des éléments d'obstruction partielle 20.

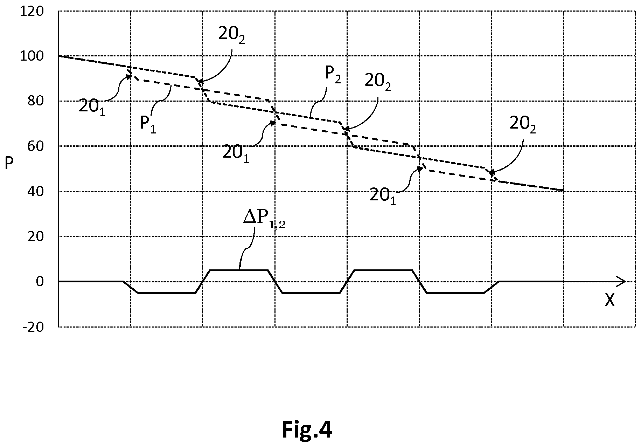

L'obstruction est partielle dans la mesure où le canal de distribution 13 considéré n'est pas bloqué totalement, de manière à maintenir l'écoulement longitudinal du fluide. Ainsi, en absence d'un élément d'obstruction partielle 20, un canal de distribution 13 peut présenter une valeur de référence S de la section de passage du fluide. Au niveau d'un élément d'obstruction partielle 20, la section de passage présente une valeur réduite S_{red} non nulle et inférieure à S. Cela peut se traduire par une diminution de la profondeur du canal de distribution 13, allant ainsi de la valeur Pc en l'absence d'un élément d'obstruction partielle 20 à la valeur réduite notée Pc_{red} en présence d'un élément d'obstruction partielle 20 (cf. fig.4A).

Les éléments d'obstruction partielle 20 peuvent être des éléments formés d'un seul tenant avec la plaque de maintien 10, tels que des bossages réalisés par emboutissage localisé ou par une modification locale du moule, ou peuvent être des éléments rapportés, c'est-à-dire distincts de la plaque de maintien 10, tels que des inserts. Les inserts peuvent être obtenus par surmoulage ou par dépôt.

Chacun des canaux de distribution 13 comporte des éléments d'obstruction partielle 20. Plus précisément, sur au moins une partie longitudinale Z du réseau de distribution, dite partie d'intérêt, tous les canaux de distribution 13 comportent des éléments d'obstruction partielle 20. Cette partie longitudinale peut s'étendre sur tout ou partie de la longueur du réseau de distribution. Ainsi, à titre d'exemple, le réseau de distribution peut comporter une ou plusieurs parties longitudinales d'intérêt Z₁, Z₂ dans lesquelles tous les canaux de distribution 13 du réseau comportent des éléments d'obstruction partielle 20. Dans le cas où il comporte plusieurs parties longitudinales d'intérêt distinctes Z₁, Z₂, celles-ci peuvent se succéder de manière continue ou être séparées par une zone longitudinale ne comportant pas d'éléments d'obstruction partielle 20.

Dans une même partie longitudinale d'intérêt Z du réseau de distribution, les éléments d'obstruction partielle 20 d'un même canal de distribution 13 sont de préférence disposés de manière sensiblement périodique suivant l'axe longitudinal du canal. Par sensiblement périodique, on entend que les éléments d'obstruction partielle 20 sont disposés longitudinalement suivant un pas p constant à 10% près. La disposition périodique des éléments d'obstruction partielle 20 le long d'un canal de distribution 13 permet d'améliorer davantage l'homogénéité spatiale de l'approvisionnement du gaz réactif à l'électrode considérée. Dans une même partie longitudinale du réseau de distribution, les éléments d'obstruction partielle 20 sont disposés longitudinalement avec la même période p d'un canal de distribution 13 à l'autre. De plus, ils peuvent présenter une même diminution locale de la section de passage du fluide, c'est-à-dire une même valeur réduite S_{red} de la section de passage. Ainsi, ils induisent une même perte de charge singulière se traduisant par une diminution locale supplémentaire du profil longitudinal de pression dans le canal de distribution considéré. De préférence, ils peuvent induire une même perte de charge singulière, hormis au moins un premier élément 20 d'un canal de distribution 13 sur deux. Un premier élément d'obstruction partielle 20 est défini comme étant un élément 20 disposé dans la première moitié du canal de distribution 13 considéré, et peut être l'élément 20 du canal de distribution 13 disposé directement à l'entrée du canal 13. Ainsi, le premier élément 20 des canaux 13ᵢ, 13ᵢ₊₂ de rang i, i+2, i+4... peut présenter une perte de charge singulière différente que celle des éléments consécutifs avals 20 des canaux 13ᵢ, 1₃ᵢ₊₂... considérés, par exemple supérieure ou inférieure, de préférence inférieure, et de préférence égale à la moitié de la perte de charge singulière des éléments consécutifs avals 20 des canaux 13ᵢ, 13ᵢ₊₂... Les canaux 13ᵢ₋₁ et 13ᵢ₊₁ comportent des éléments 20 qui présentent alors une même perte de charge singulière, hormis, de préférence, au moins un dernier élément 20 qui présente une perte de charge singulière différente de celle des éléments 20 amont, ceci pour que les canaux 13ᵢ₋₁, 13ᵢ, 13ᵢ₊₁... présentent une même perte de charge totale d'un canal 13 à l'autre. Un dernier élément d'obstruction partielle 20 est défini comme étant un élément 20 disposé dans la deuxième moitié du canal de distribution 13 considéré, et peut être l'élément 20 du canal de distribution 13 disposé directement à la sortie du canal 13. Comme décrit en détail plus loin, ce dimensionnement permet d'améliorer davantage l'homogénéité spatiale de l'approvisionnement du gaz réactif à l'électrode considérée.

Les éléments d'obstruction partielle 20 de chaque canal de distribution 13 sont agencés de manière à présenter un décalage longitudinal ΔL_{b} non nul, ou déphasage, avec ceux des canaux de distribution 13 adjacents. Le déphasage est défini par rapport à un axe transversal, orthogonal à l'axe longitudinal d'un canal de distribution 13 et passant par le centre d'un élément d'obstruction partielle 20 dudit canal. Le centre d'un élément d'obstruction partielle 20 peut être son barycentre. Il y a décalage longitudinal, ou déphasage, lorsque l'axe transversal passe par le centre de l'élément d'obstruction partielle 20 du canal 13 de rang i et ne passe pas par le centre d'un élément d'obstruction partielle 20 des canaux adjacents de rang i-1 et i+1.

Il apparaît que ce décalage longitudinal ΔL_{b} entre les éléments d'obstruction partielle 20 des canaux de distribution 13 se traduit par une différence de pression transversale locale entre les canaux de distribution 13 adjacents. En effet, l'élément d'obstruction partielle 20 d'un canal 13 de rang i provoque une perte de charge singulière, laquelle n'est pas présente dans les canaux de rang i-1 et i+1 adjacent à la position x suivant l'axe longitudinal des canaux de distribution 13, se traduisant alors par la génération d'une différence de pression transversale locale. C'est particulièrement le cas lorsque la somme des pertes de charges singulières, à la position x, associée au canal de rang i, diffère de celle des canaux de rang i-1 et i+1. La différence de pression transversale locale, à la position x, peut être notée ΔP_{i-1,i}(x)= |Pᵢ(x)-Pᵢ₋₁(x)|, pour les canaux de rang i-1 et i, et ΔP_{i,i+1}(x)= |Pᵢ₊₁(x)-Pᵢ(x)| pour les canaux de rang i et i+1. Elle peut être de l'ordre d'un à quelques millibars. Ainsi, il apparaît que cette différence de pression transversale locale provoque la migration transversale du gaz réactif dans la couche de diffusion 6 par convection et non plus seulement par diffusion. Le gaz réactif s'écoule alors également dans la zone de l'électrode située en regard de la nervure de séparation 17, ce qui conduit à améliorer l'homogénéité spatiale d'approvisionnement du gaz réactif à l'électrode. Ceci est d'autant plus marqué que les éléments d'obstruction partielle 20 d'un canal de distribution 13 sont agencés en opposition de phase vis-à-vis de ceux des canaux de distribution 13 adjacents.

Ainsi, une même partie longitudinale d'intérêt peut être caractérisée notamment par :
- la période p de l'agencement périodique des éléments d'obstruction partielle 20 le long de chacun des canaux de distribution 13,
- un décalage longitudinal ΔL_{b} entre les éléments d'obstruction partielle 20 des canaux de distribution 13 adjacents, et
- la valeur S_{red} de la section de passage réduite du fluide au niveau des éléments d'obstruction partielle 20.

Comme mentionné précédemment, la période p, le décalage longitudinal ΔL_{b}, et la section réduite S_{red} sont de préférence constants dans une même partie longitudinale d'intérêt Z. Le réseau de distribution peut comporter différentes parties d'intérêt Z₁, Z₂, lesquelles peuvent différer les unes des autres par les valeurs de p, ΔL_{b}, et/ou S_{red}.

Les éléments d'obstruction partielle 20 sont avantageusement agencés dans les canaux de distribution 13 du réseau de sorte que la perte de charge totale associée à chaque canal de distribution 13 reste identique d'un canal de distribution 13 à l'autre. Ainsi, l'introduction du gaz réactif à l'entrée du réseau de distribution reste sensiblement homogène entre les canaux de distribution 13. Cela contribue à améliorer l'homogénéité de la distribution spatiale du gaz réactif à l'électrode considérée.

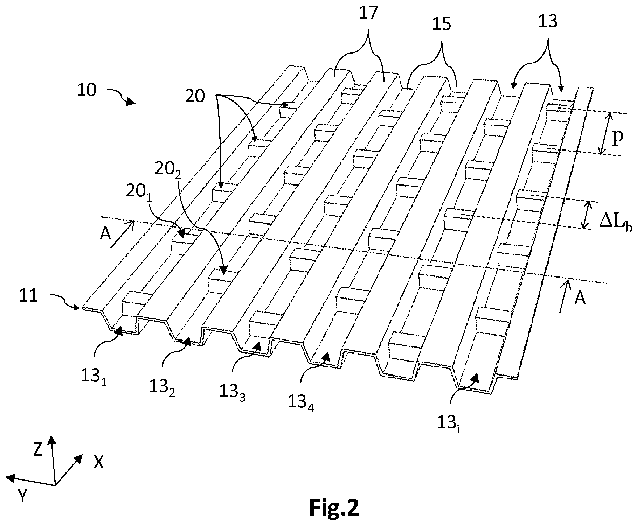

La figure 2 est une vue en perspective, schématique et partielle, d'une partie de tôle conductrice 11 d'une plaque de maintien 10 selon un premier mode de réalisation. Dans cet exemple, la plaque de maintien 10 est formée de deux tôles conductrices 11 accolées l'une à l'autre. Dans cet exemple, seule la tôle conductrice cathodique est représentée. Les canaux de distribution 13 sont formés par des reliefs de la tôle conductrice 11 et sont séparés transversalement deux à deux par des nervures de séparation 17.

La fig.2 illustre une partie longitudinale d'intérêt dans laquelle la plaque de maintien 10 comporte des éléments d'obstruction partielle 20. Ici, les éléments sont des bossages dits d'homogénéisation réalisés par emboutissage localisé de la paroi de fond 15, qui induisent une diminution locale de la section de passage des canaux de distribution 13. Ils sont identiques les uns les autres, de sorte qu'ils entraînent une même perte de charge singulière.

Ils sont agencés dans chacun des canaux de distribution 13 du réseau de manière sensiblement périodique, à la période p. De plus, les bossages d'homogénéisation 20 de chaque canal de distribution 13 sont disposés de manière à présenter un décalage longitudinal ΔL_{b} avec ceux des canaux de distribution 13 adjacents. Dans cet exemple, les bossages d'homogénéisation 20 sont agencés en opposition de phase avec ceux des canaux 13 adjacents.

Ainsi, les bossages d'homogénéisation 20 entraînent une diminution locale et périodique de la section de passage du gaz réactif dans les canaux de distribution 13, ce qui se traduit par la présence de pertes de charges singulières qui provoquent une diminution locale supplémentaire du profil longitudinal de pression après chaque passage d'un bossage d'homogénéisation 20. Une différence de pression transverse locale périodique est alors générée entre les canaux de distribution 13 adjacents. Ainsi, le gaz réactif migre au travers de la couche de diffusion 6, non seulement par diffusion, mais également par convection, du fait de la différence de pression transversale locale ΔP. L'approvisionnement local du gaz réactif à l'électrode est ainsi rendu plus homogène.

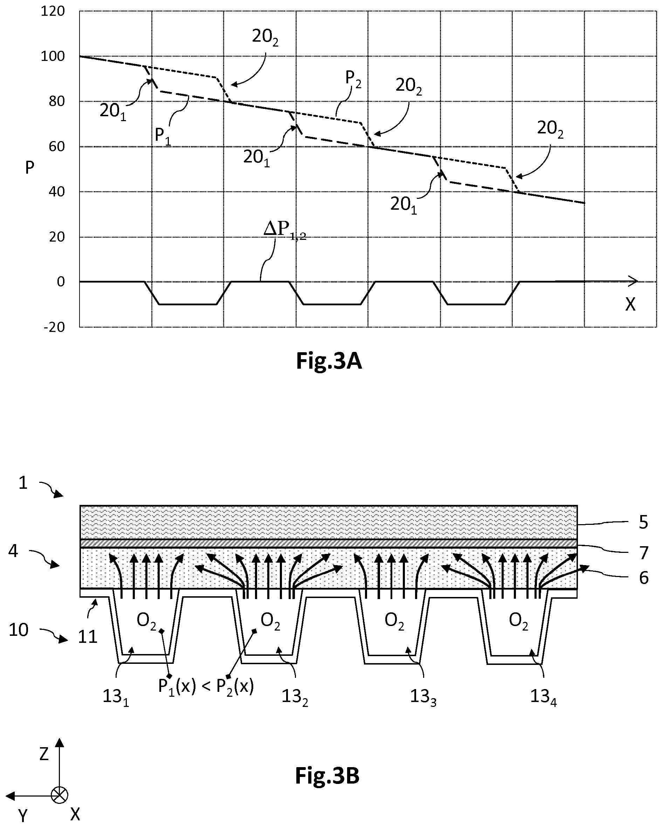

La figure 3A illustre un exemple de profils longitudinaux de pression P₁, P₂ dans deux canaux de distribution 13₁, 13₂ adjacents ainsi que le profil longitudinal de la différence de pression transversale locale ΔP_{1,2} qui en résulte, et la figure 3B est une vue en coupe transversale, schématique et partielle, d'une cellule électrochimique comportant la plaque de maintien illustrée sur la fig.2, suivant le plan de coupe A-A.

Comme l'illustre la fig.3A, les profils longitudinaux de pression P₁, P₂ dans les canaux de distribution 13₁ et 13₂ diminuent entre l'entrée et la sortie du réseau de distribution. Les profils comportent deux termes, un premier terme correspondant à la perte de charge linéaire, lequel est sensiblement égal d'un canal à l'autre, et un deuxième terme correspondant aux pertes de charges singulières dues aux bossages d'homogénéisation 20₁ (dans le canal 13₁) et 20₂ (dans le canal 13₂). Ainsi, le canal 13₁ comporte un premier bossage 20₁ situé en amont du premier bossage 202 du canal 13₂. En amont du premier bossage 20₁, la pression locale est identique dans les deux canaux 13₁ et 13₂, de sorte que la différence de pression transversale ΔP_{1,2} est nulle. Entre le premier bossage 20₁ et le premier bossage 20₂, la pression locale P₁ a subi une diminution locale supplémentaire du fait du premier bossage 20₁ alors que ce n'est pas le cas pour la pression locale P2, de sorte qu'une différence de pression transversale ΔP_{1,2} non nulle est générée, qui conduit à une migration transversale par convection du gaz réactif du canal 13₂ vers le canal 13₁, améliorant l'homogénéité de l'approvisionnement local du gaz réactif à l'électrode. La différence de pression transversale ΔP_{1,2} est non nulle lorsque la somme des pertes de charges singulières, à la position x, associée au canal 13₁ diffère de celle du canal 13₂.

La fig.3B illustre la cathode 4 de la cellule électrochimique 1 et la tôle conductrice 11 de la plaque de maintien 10 de la fig.2, suivant le plan de coupe A-A. La tôle conductrice 11 cathodique est au contact de la couche de diffusion 6 de la cathode 4 par les nervures de séparation des canaux de distribution 13. Les bossages d'homogénéisation 20 des canaux de distribution 13 adjacents présentent un décalage longitudinal ΔL_{b}, ici en opposition de phase, de sorte que chaque canal 13 présente une perte de charge singulière générant une différence de pression transversale ΔP_{i,i+1} non nulle lorsque la somme des pertes de charges singulières, à la position x, associée au canal 13ᵢ diffère de celle du canal 13ᵢ₊₁. Ici, le plan de coupe A-A (cf. fig.2) passe entre les deuxième et troisième bossages 20₁ du canal 13₁ et entre les premier et deuxième bossages 20₂ du canal 13₂. Aussi, la pression locale P₁(x) du canal 13₁ est inférieure à la pression locale P₂(x) du canal 13₂. Il y a donc génération d'une différence de pression transversale locale ΔP_{1,2}(x)= |P₂(x)-P₁(x)|>0 qui provoque la migration transversale par convection de l'oxygène circulant dans le canal 13₂ au travers de la couche de diffusion 6 en direction du canal 13₁. De même, il y a migration transversale par convection de l'oxygène circulant dans le canal 13₂ au travers de la couche de diffusion 6 en direction du canal 13₃. Il en résulte que des zones de la cathode 4 situées en regard des nervures de séparation 17 sont davantage approvisionnées en gaz réactif, améliorant ainsi l'homogénéité de la distribution spatiale de gaz réactif à l'électrode.

La figure 4 illustre un autre exemple de profils longitudinaux de pression P₁, P₂ dans deux canaux de distribution 13₁,13₂ adjacents ainsi que le profil longitudinal de la différence de pression transversale locale ΔP_{1,2} qui en résulte.

Cet exemple diffère de celui illustré sur la fig.3A essentiellement en ce que le premier bossage 20₁ du canal 13₁ présente une hauteur inférieure à celle des autres bossages 13₁ du canal 13₁ et à celle des bossages 13₂ du canal 13₂, et de préférence une hauteur correspondant à une perte de charge singulière deux fois plus faible. Plus précisément, les bossages 13₁ du canal 13₁ sont identiques entre eux et induisent une même perte de charge singulière, hormis au moins l'un des premiers bossages 20₁, ici le premier bossage 20₁. Celui-ci induit alors une perte de charge singulière inférieure aux autres bossages 20₁. Par ailleurs, pour que la perte de charge totale soit identique entre les canaux 13₁ et 13₂, l'un des derniers bossages 20₂, ici le dernier bossage 20₂, présente avantageusement une perte de charge singulière sensiblement identique à celle du premier bossage 20₁.

Du fait que le premier bossage 20₁ présente une perte de charge singulière inférieure de celles des bossages 20₁ suivants et de celles des bossages 20₂ adjacents, une différence de pression transversale locale ΔP non nulle est générée après chaque bossage 20₁ et 20₂, dans la mesure où, en chaque point x, la somme des pertes de charges singulières associée au canal 13₁ diffère de celle du canal 13₂. Il en résulte que la migration transversale par convection de l'oxygène au travers de la couche de diffusion 6 entre les canaux 13₁ et 13₃ est améliorée. L'homogénéité de la distribution spatiale de gaz réactif à l'électrode est donc augmentée. Il apparaît en outre que le signe de la différence de pression transversale locale ΔP change après chaque bossage 20₁, ce qui se traduit par une modification de la direction de la migration transversale par convection du gaz réactif, améliorant ainsi davantage l'homogénéité de la distribution spatiale du gaz réactif.

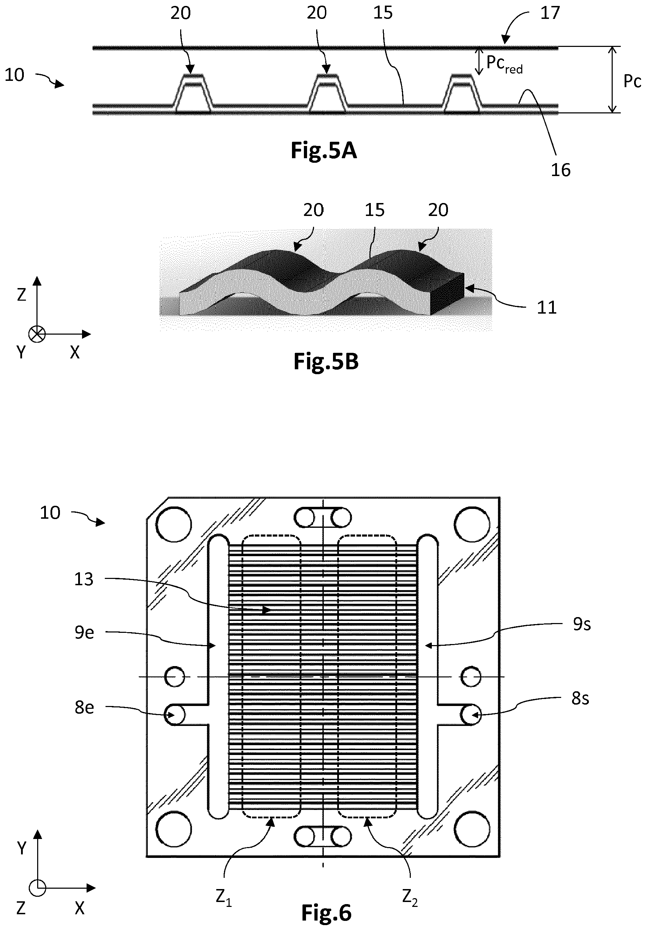

Les figures 5A et 5B sont des vues schématiques et partielles, en coupe longitudinale (fig.5A) et en perspective (fig.5B), de deux variantes de réalisation des éléments d'obstruction partielle 20 répartis périodiquement le long d'un canal de distribution 13.

La fig.5A illustre une variante dans laquelle la paroi de fond 15 de la tôle conductrice 11 est sensiblement plane, hormis au niveau des éléments d'obstruction partielle 20, lesquels peuvent être formés par emboutissage localisé de la tôle conductrice 11. Plus précisément, la paroi de fond 15 comporte des portions 16 de surface longitudinale sensiblement planes, lesquelles sont séparées longitudinalement par les bossages d'homogénéisation 20.

La fig.5B illustre une autre variante dans laquelle la paroi de fond 15 de la tôle conductrice 11 n'est pas sensiblement plane, mais présente des ondulations sinusoïdales continues de manière à former les éléments d'obstruction partielle 20.

A titre d'exemple, la tôle conductrice 11 peut présenter une épaisseur constante de 100µm, et les éléments d'obstruction partielle 20 peuvent être agencés longitudinalement suivant une période de 500µm et présenter une amplitude de 100µm.

La figure 6 est une vue de dessus, schématique et partielle, d'une plaque de maintien 10 d'une pile à combustible selon un mode de réalisation, similaire à celle décrite dans le document WO2007/147991. La face illustrée ici peut être la face cathodique destinée à approvisionner la cathode 4 de la cellule électrochimique 1 en oxygène.

La plaque de maintien 10 comporte un collecteur d'entrée 8e et un collecteur de sortie 8s reliés l'un à l'autre par un réseau de distribution. Les canaux de distribution 13 s'étendent ici de manière rectiligne entre un compartiment d'entrée 9e et un compartiment de sortie 9s.

Dans cet exemple, le réseau de distribution comporte deux parties d'intérêt Z₁ et Z₂ à éléments d'obstruction partielle 20 (non représentés). Les éléments d'obstruction partielle 20 peuvent être ici des bossages formés par moulage, voire des inserts insérés dans les canaux de distribution 13 après réalisation de la plaque de maintien 10.

Les deux parties d'intérêt Z₁ et Z₂ sont ici séparées l'une de l'autre suivant l'axe longitudinal par une zone intermédiaire ne comportant pas d'éléments d'obstruction partielle 20, mais en variante elles peuvent être accolées longitudinalement l'une à l'autre.

La partie d'intérêt Z₁ comporte des éléments d'obstruction partielle 20 (non représentés) situés dans chacun des canaux de distribution 13 du réseau, et agencés longitudinalement de manière périodique au pas p₁. Les éléments d'obstruction partielle 20 sont identiques les uns aux autres, et présentent un décalage longitudinal ΔL_{b,1}, de préférence en opposition de phase, et une valeur S_{red,1} de section réduite de passage du fluide. De préférence, le nombre, l'agencement et les dimensions des éléments d'obstruction partielle 20 sont choisis de sorte que la perte de charge totale de chacun des canaux de distribution 13 est identique dans la partie d'intérêt Z₁, de manière à ne pas provoquer un déséquilibre d'écoulement du gaz réactif entre les canaux de distribution 13.

La partie d'intérêt Z₂ comporte des éléments d'obstruction partielle 20 (non représentés) situés dans chacun des canaux de distribution 13 du réseau, et agencés longitudinalement de manière périodique à la période p₂. La période p₂ peut être différente ou identique à la période p₁. Les éléments d'obstruction partielle 20 sont identiques les uns aux autres, et présentent un décalage longitudinal AL_{b,2}, de préférence en opposition de phase, et une valeur S_{red,2} de la section réduite de passage du fluide. De préférence, le nombre, l'agencement et les dimensions des éléments d'obstruction partielle 20 sont choisis de sorte que la perte de charge totale de chacun des canaux de distribution 13 est identique dans la partie d'intérêt Z₂, de manière à ne pas provoquer un déséquilibre d'écoulement du gaz réactif entre les canaux de distribution 13. Ainsi, la perte de charge totale des canaux de distribution 13 est identique d'un canal à l'autre, ce qui permet de maintenir un approvisionnement local sensiblement homogène de l'électrode.

Les valeurs de la période p, du décalage longitudinal ΔL_{b} et de la section réduite S_{red} de passage fluidique peuvent être optimisées de manière expérimentale ou numérique en fonction notamment des conditions nominales souhaitées de fonctionnement de la cellule électrochimique 1, et en tant compte des contraintes mécaniques liées au procédé de réalisation des éléments d'obstruction partielle 20 de la plaque de maintien 10.

Le réseau de distribution illustré sur cette figure est un réseau à canaux rectilignes. L'invention peut également s'appliquer à tout type de réseau de distribution, notamment les réseaux en serpentin dans lesquels les canaux sont courbes de manière à couvrir la zone active de la cellule électrochimique 1 par 'va-et-vient', voire également les réseaux à canaux interdigités, dans lesquels chaque canal de distribution 13 est comporte une partie amont dont l'extrémité est obturée, de manière à obliger le fluide à traverser la couche de diffusion 6 pour rejoindre la partie aval du canal de distribution 13.

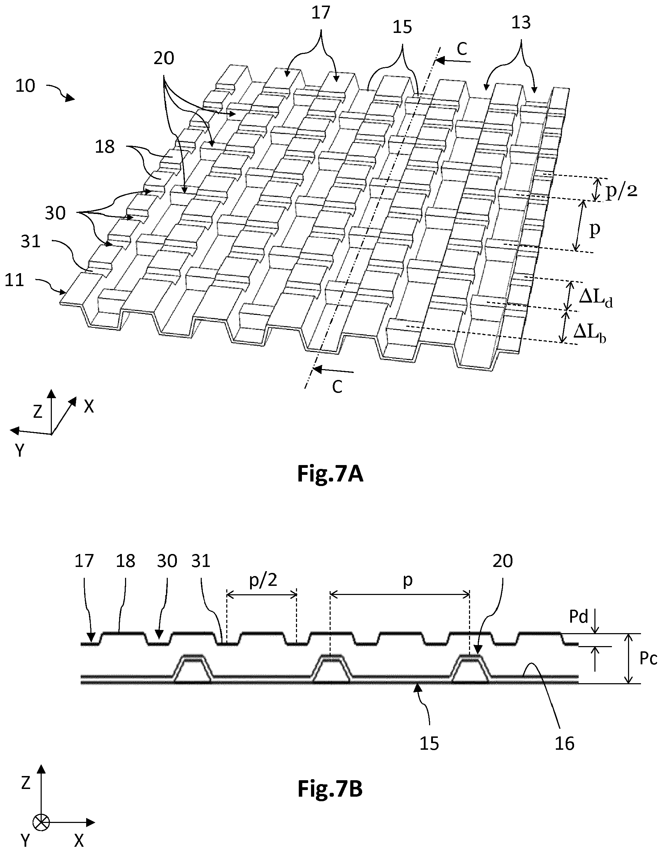

Les figures 7A et 7B sont des vues schématiques et partielles, en perspective (fig.7A) et en coupe longitudinale (fig.7B) d'une partie de tôle d'une plaque de maintien 10 selon un deuxième mode de réalisation.

La plaque de maintien 10 ne diffère de celle illustrée sur la fig.2 essentiellement en ce qu'elle comporte en outre des décrochements transversaux 30 locaux au niveau de la nervure de séparation 17. Un décrochement transversal 30 local est une partie de la nervure de séparation 17 qui s'étend suivant un axe transversal à la nervure, et dont la surface de fond 31 est en retrait par rapport à un plan principal qui passe par sa surface longitudinale 18. Dans cet exemple, la nervure de séparation 17 s'étend suivant l'axe longitudinal X et la surface longitudinale s'étend suivant le plan XY. Elle comporte une pluralité de décrochements transversaux 30 locaux, qui s'étendent suivant l'axe transversal Y, en retrait suivant la direction -Z par rapport au plan XY.

On note Pd la profondeur du décrochement transversal 30 comme étant la dimension suivant l'axe Z entre le plan principal de la nervure de séparation 17 et la surface de fond 31 du décrochement transversal 30. Le décrochement transversal 30 s'étend de préférence suivant l'axe Y sur toute la largeur de la nervure de séparation 17, de manière à déboucher dans les deux canaux de distribution 13 adjacents. Par ailleurs, comme mentionné précédemment, Pc est la profondeur d'un canal de distribution 13 en l'absence d'élément d'obstruction partielle 20.

La profondeur Pd du décrochement transversal 30 est inférieure à la profondeur Pc des canaux de distribution 13. La profondeur Pd peut être ajustée pour que la surface de fond 31 du décrochement transversal 30 reste, ou non, au contact de la couche de diffusion 6. En effet, la couche de diffusion 6 étant habituellement réalisée en un matériau poreux déformable, la nervure de séparation 17 est au contact de la couche de diffusion 6 au niveau de la surface longitudinale 18 et au niveau de la surface de fond 31 du décrochement transversal 30 lorsque la profondeur Pd est inférieure ou égale à une valeur seuil Pdₜₕ. En variante, lorsque la profondeur Pd est supérieure à la valeur seuil Pdₜₕ, la nervure de séparation 17 est au contact de la couche de diffusion 6 au niveau de la seule surface longitudinale 18 et non pas au niveau de la surface de fond 31 du décrochement transversal 30. La profondeur Pd des décrochements transversaux 30 peut être ajustée en fonction de la porosité de la couche de diffusion 6.

La présence d'un décrochement transversal 30 de la nervure de séparation 17 de deux canaux de distribution 13 adjacents autorise ainsi la migration transversale du gaz réactif dans une zone de l'électrode située en regard de la nervure de séparation 17, améliorant ainsi l'homogénéité de l'approvisionnement local du gaz réactif à l'électrode.

Les décrochements transversaux 30 sont avantageusement disposés le long de la nervure de séparation 17 de manière à présenter un décalage longitudinal ΔL_{d} non nul vis-à-vis des éléments d'obstruction partielle 20 des canaux de distribution 13 adjacents. Ainsi, la migration transversale du gaz réactif au travers de la couche de diffusion 6 est permise dans une zone où celui-ci peut être contraint de migrer transversalement par convection du fait d'une présence d'un élément d'obstruction partielle 20. Il en résulte donc que l'homogénéité spatiale d'approvisionnement local est ainsi améliorée. En effet, les zones de l'électrode situées en regard des nervures de séparation 17 sont approvisionnées en gaz réactif par convection du fait de la différence transversale de pression locale issue de l'alternance des éléments d'obstruction partielle 20, et par diffusion du fait de la présence de décrochements transversaux 30 locaux.

De préférence, les décrochements transversaux 30 situés dans une même partie d'intérêt Z présentent les mêmes dimensions. Ils peuvent être agencés le long d'une même nervure de séparation 17 de manière périodique, par exemple avec une période p/2. Ainsi, il y a une alternance longitudinale périodique entre une zone à différence de pression transversale ΔP liée à la présence d'un élément d'obstruction partielle 20, et une zone à décrochement transversal 30. Ainsi, l'approvisionnement local du gaz réactif à l'électrode est rendu davantage homogène.

Des modes de réalisation particuliers viennent d'être décrits. Différentes variantes et modifications apparaîtront à l'homme du métier.

## Revendications

1. Plaque de maintien (10) d'une pile à combustible, destinée à maintenir un assemblage (2) membrane électrodes d'une cellule électrochimique (1) dont les électrodes comportent une couche de diffusion (6), comportant :
∘ un réseau de canaux de distribution (13) situé à une face destinée à être au contact de la couche de diffusion (6) de l'une des électrodes, et destiné à distribuer un gaz réactif à ladite électrode, les canaux de distribution (13) étant séparés deux à deux par une nervure de séparation (17) destinée à être au contact de ladite couche de diffusion (6) ;
∘ dans au moins une partie longitudinale (Z₁, Z₂) du réseau de distribution, une pluralité d'éléments d'obstruction partielle (20), distincts les uns des autres,
• situés dans chacun des canaux de distribution (13) du réseau, adaptés à y induire une diminution locale d'une section de passage de gaz réactif, et disposés longitudinalement de manière sensiblement périodique,
• les éléments d'obstruction partielle (20) de chaque canal de distribution (13) étant agencés de manière à présenter un décalage longitudinal (ΔL_{b}) avec ceux des canaux de distribution (13) adjacents,
**caractérisée en ce que**
∘ dans au moins ladite partie longitudinale (Z₁, Z₂) du réseau de distribution, les nervures de séparation (17) comportent chacune une pluralité de décrochements transversaux (30) distincts les uns des autres et agencés de manière à présenter un décalage longitudinal (ΔL_{d}) avec les éléments d'obstruction partielle (20) des canaux de distribution (13) adjacents.

2. Plaque de maintien (10) selon la revendication 1, dans laquelle les éléments d'obstruction partielle (20) sont des bossages formés dans une surface de fond des canaux de distribution (13), ou des inserts placés dans les canaux de distribution (13).

3. Plaque de maintien (10) selon la revendication 1 ou 2, dans laquelle les éléments d'obstruction partielle (20) de chaque canal de distribution (13) sont agencés de manière à être en opposition de phase avec ceux des canaux de distribution (13) adjacents.

4. Plaque de maintien (10) selon l'une quelconque des revendications 1 à 3, dans laquelle les éléments d'obstruction partielle (20) des canaux de distribution (13) induisent chacun une perte de charge singulière, et sont dimensionnés pour induire une même perte de charge totale pour chacun des canaux de distribution (13).

5. Plaque de maintien (10) selon la revendication 4, dans laquelle au moins un premier élément d'obstruction partielle (20ᵢ) d'un canal de distribution (13ᵢ) de rang i, situé à une entrée du canal de distribution destinée à recevoir le gaz réactif, présente une première perte de charge singulière différente des pertes de charges singulières induites par des autres éléments avals d'obstruction partielle (20) du même canal de distribution (13ᵢ).

6. Plaque de maintien (10) selon la revendication 5, dans laquelle au moins un dernier élément d'obstruction partielle (20ᵢ₋₁, 20ᵢ₊₁) des canaux de distribution (13ᵢ₋₁, 13ᵢ₊₁) de rang i-1 et i+1, adjacents au canal de distribution (13ᵢ) de rang i, situé à une sortie desdits canaux de distribution de rang i-1 et i+1, présente une dernière perte de charge singulière sensiblement égale à ladite première perte de charge singulière.

7. Plaque de maintien (10) selon l'une quelconque des revendications 1 à 6, dans laquelle le réseau de distribution comporte plusieurs parties longitudinales (Z₁, Z₂) distinctes les unes des autres, disposées longitudinalement à la suite les unes des autres, qui diffèrent entre elles par la valeur de la période (p) d'agencement longitudinal des éléments d'obstruction partielle (20), d'une section réduite de passage fluidique au niveau des éléments d'obstruction partielle (20), et/ou du décalage longitudinal (ΔL_{b}) entre les éléments d'obstruction partielle (20) des canaux de distribution (13) adjacents.

8. Plaque de maintien (10) selon l'une quelconque des revendications 1 à 7, formée de deux tôles électriquement conductrices (11) d'une épaisseur sensiblement constante, dont les canaux de distribution (13) sont formés par des bossages des tôles conductrices (11), les canaux de distribution (13) comportant chacun une paroi longitudinale de fond (15) reliée aux nervures de séparation (17) par des parois latérales.

9. Plaque de maintien (10) selon la revendication 8, dans laquelle la paroi longitudinale de fond (15) des canaux de distribution (13) comportant des portions planes (16) séparées longitudinalement les unes des autres par des bossages formant des éléments d'obstruction partielle (20), ou dans lequel la paroi longitudinale de fond (15) s'étend longitudinalement de manière courbe de manière à former des oscillations continues périodiques définissant les éléments d'obstruction partielle (20).

10. Plaque de maintien (10) selon l'une quelconque des revendications 1 à 9, dans laquelle les décrochements transversaux (30) d'une même nervure de séparation (17) sont agencés longitudinalement de manière sensiblement périodique, de préférence à la moitié (p/2) de la période (p) d'agencement longitudinal des éléments d'obstruction partielle (20) d'un même canal de distribution (13).

11. Plaque de maintien (10) selon la revendication 10, dans laquelle les décrochements transversaux (30) sont formés d'une surface de fond (31) reliée à une surface longitudinale (18) sensiblement plane par des parois latérales, la surface de fond (31) s'étendant suivant un axe sensiblement orthogonal à l'axe longitudinal de la nervure de séparation (17).

## Patentansprüche

1. Halteplatte (10) für eine Brennstoffzelle, die dazu bestimmt ist, eine Membran-Elektroden-Baugruppe (2) einer elektrochemischen Zelle (1), deren Elektroden eine Diffusionsschicht (6) aufweisen, zu halten, umfassend:
∘ ein Netz von Verteilungskanälen (13), das sich auf einer Fläche befindet, die dazu bestimmt ist, mit der Diffusionsschicht (6) einer der Elektroden in Kontakt zu stehen, und das dazu bestimmt ist, der Elektrode ein reaktives Gas zuzuführen, wobei die Verteilungskanäle (13) paarweise durch eine Trennrippe (17) getrennt sind, die dazu bestimmt ist, mit der Diffusionsschicht (6) in Kontakt zu stehen;
∘ in zumindest einem Längsabschnitt (Z₁, Z₂) des Verteilungsnetzes mehrere voneinander getrennte Teilverschlusselemente (20),
• die sich in jedem der Verteilungskanäle (13) des Netzes befinden, dazu ausgelegt sind, darin eine lokale Reduzierung eines Durchgangsquerschnitts von reaktivem Gas zu induzieren, und in Längsrichtung im Wesentlichen periodisch angeordnet sind,
• wobei die Teilverschlusselemente (20) jedes Verteilungskanals (13) so angeordnet sind, dass sie zu denen der benachbarten Verteilungskanäle (13) einen Längsversatz (ΔL_{b}) aufweisen,
**dadurch gekennzeichnet, dass**
∘ in zumindest dem Längsabschnitt (Z₁, Z₂) des Verteilungsnetzes die Trennrippen (17) jeweils mehrere voneinander getrennte Querabsätze (30) aufweisen, die so angeordnet sind, dass sie zu den Teilverschlusselementen (20) der benachbarten Verteilungskanäle (13) einen Längsversatz (ΔL_{d}) aufweisen.

2. Halteplatte (10) nach Anspruch 1, wobei die Teilverschlusselemente (20) in einer Bodenfläche der Verteilungskanäle (13) ausgebildete Vorsprünge oder in den Verteilungskanälen (13) angeordnete Einsätze sind.

3. Halteplatte (10) nach Anspruch 1 oder 2, wobei die Teilverschlusselemente (20) jedes Verteilungskanals (13) so angeordnet sind, dass sie zu denen der benachbarten Verteilungskanäle (13) gegenphasig sind.

4. Halteplatte (10) nach einem der Ansprüche 1 bis 3, wobei die Teilverschlusselemente (20) der Verteilungskanäle (13) jeweils einen singulären Druckabfall induzieren und so dimensioniert sind, dass sie für jeden der Verteilungskanäle (13) denselben Gesamtdruckabfall induzieren.

5. Halteplatte (10) nach Anspruch 4, wobei zumindest ein erstes Teilverschlusselement (20ᵢ) eines Verteilungskanals (13ᵢ) des Rangs i, das sich an einem zur Aufnahme des reaktiven Gases vorgesehenen Eingang des Verteilungskanals befindet, einen ersten singulären Druckabfall aufweist, der sich von den durch die anderen nachgeschalteten Teilverschlusselemente (20) desselben Verteilungskanals (13ᵢ) induzierten singulären Druckabfällen unterscheidet.

6. Halteplatte (10) nach Anspruch 5, wobei zumindest ein letztes Teilverschlusselement (20ᵢ₋₁, 20ᵢ₊₁) der an den Verteilungskanal (13ᵢ) des Rangs i angrenzenden Verteilungskanäle (13ᵢ₋₁, 13ᵢ₊₁) des Rangs i-1 und i+1, das sich an einem Ausgang der Verteilungskanäle des Rangs i-1 und i+1 befindet, einen letzten singulären Druckabfall aufweist, der im Wesentlichen gleich dem ersten singulären Druckabfall ist.

7. Halteplatte (10) nach einem der Ansprüche 1 bis 6, wobei das Verteilungsnetz mehrere voneinander getrennte Längsabschnitte (Z₁, Z₂) aufweist, die in Längsrichtung hintereinander angeordnet sind und sich voneinander durch den Wert der Längsanordnungsperiode (p) der Teilverschlusselemente (20), des reduzierten Fluiddurchgangsquerschnitts im Bereich der Teilverschlusselemente (20) und/oder des Längsversatzes (ΔL_{b}) zwischen den Teilverschlusselementen (20) der benachbarten Verteilungskanäle (13) unterscheiden.

8. Halteplatte (10) nach einem der Ansprüche 1 bis 7, die aus zwei elektrisch leitenden Blechen (11) von im Wesentlichen konstanter Dicke ausgebildet ist, deren Verteilungskanäle (13) durch Vorsprünge der leitenden Bleche (11) ausgebildet sind, wobei die Verteilungskanäle (13) jeweils eine längliche Bodenwand (15) aufweisen, die durch Seitenwände mit den Trennrippen (17) verbunden ist.

9. Halteplatte (10) nach Anspruch 8, wobei die längliche Bodenwand (15) der Verteilungskanäle (13) ebene Abschnitte (16) aufweist, die in Längsrichtung durch Vorsprünge, die Teilverschlusselemente (20) ausbilden, voneinander getrennt sind, oder wobei sich die längliche Bodenwand (15) in Längsrichtung in gekrümmter Weise erstreckt, so dass sie kontinuierliche periodische Schwingungen ausbildet, die die Teilverschlusselemente (20) definieren.

10. Halteplatte (10) nach einem der Ansprüche 1 bis 9, wobei die Querabsätze (30) derselben Trennrippe (17) in Längsrichtung im Wesentlichen periodisch, vorzugsweise auf der Hälfte (p/2) der Längsanordnungsperiode (p) der Teilverschlusselemente (20) desselben Verteilungskanals (13), angeordnet sind.

11. Halteplatte (10) nach Anspruch 10, wobei die Querabsätze (30) durch eine Bodenfläche (31) ausgebildet sind, die durch Seitenwände mit einer im Wesentlichen ebenen Längsfläche (18) verbunden ist, wobei sich die Bodenfläche (31) entlang einer zur Längsachse der Trennrippe (17) im Wesentlichen senkrechten Achse erstreckt.

## Claims

1. Holding plate (10) for a fuel cell, intended to hold an electrode membrane assembly (2) of an electrochemical cell (1) whose electrodes comprise a diffusion layer (6), comprising:
∘ a network of distribution channels (13) situated on a face intended to be in contact with the diffusion layer (6) of one of the electrodes, and intended to distribute a reactive gas to said electrode, the distribution channels (13) being separated pairwise by a separating rib (17) intended to be in contact with said diffusion layer (6);
∘ in at least a longitudinal part (Z₁, Z₂) of the distribution network, a plurality of partial blocking elements (20), distinct from one another,
• situated in each of the distribution channels (13) of the network, suitable for inducing therein a local reduction of a reactive gas flow cross section, and disposed longitudinally substantially periodically,
• the partial blocking elements (20) of each distribution channel (13) being arranged so as to exhibit a longitudinal offset (ΔL_{b}) with those of the adjacent distribution channels (13),
**characterized in that**
∘ in at least said longitudinal part (Z₁, Z₂) of the distribution network, the separating ribs (17) each comprise a plurality of transverse recesses (30) distinct from one another and arranged so as to exhibit a longitudinal offset (ΔL_{d}) with the partial blocking elements (20) of the adjacent distribution channels (13).

2. Holding plate (10) according to Claim 1, wherein the partial blocking elements (20) are bosses formed in a bottom surface of the distribution channels (13), or inserts placed in the distribution channels (13).

3. Holding plate (10) according to Claim 1 or 2, wherein the partial blocking elements (20) of each distribution channel (13) are arranged so as to be in phase opposition with those of the adjacent distribution channels (13).

4. Holding plate (10) according to any one of Claims 1 to 3, wherein the partial blocking elements (20) of the distribution channels (13) each induce a singular pressure drop, and are dimensioned to induce the same total pressure drop for each of the distribution channels (13).

5. Holding plate (10) according to Claim 4, wherein at least one first partial blocking element (20ᵢ) of a distribution channel (13ᵢ) of rank i, situated at an input of the distribution channel intended to receive the reactive gas, exhibits a first singular pressure drop that is different from the singular pressure drops induced by other downstream partial blocking elements (20) of the same distribution channel (13ᵢ).

6. Holding plate (10) according to Claim 5, wherein at least one last partial blocking element (20ᵢ₋₁, 20ᵢ₊₁) of the distribution channels (13ᵢ₋₁, 13ᵢ₊₁) of rank i-1 and i+1, adjacent to the distribution channel (13i) of rank i, situated at an output of said distribution channels of rank i-1 and i+1, exhibits a last singular pressure drop substantially equal to said first singular pressure drop.

7. Holding plate (10) according to any one of Claims 1 to 6, wherein the distribution network comprises longitudinal parts (Z₁, Z₂) distinct from one another, disposed longitudinally following one another, which differ from one another by the value of the period (p) of longitudinal arrangement of the partial blocking elements (20), of a reduced fluidic flow cross-section at the partial blocking elements (20), and/or of the longitudinal offset (ΔL_{b}) between the partial blocking elements (20) of the adjacent distribution channels (13).

8. Holding plate (10) according to any one of Claims 1 to 7, formed from two electrically conductive metal sheets (11) of substantially constant thickness, in which the distribution channels (13) are formed by bosses of the conductive metal sheets (11), the distribution channels (13) each comprising a bottom longitudinal wall (15) linked to the separating ribs (17) by lateral walls.

9. Holding plate (10) according to Claim 8, wherein the bottom longitudinal wall (15) of the distribution channels (13) comprises flat portions (16) separated longitudinally from one another by bosses forming partial blocking elements (20), or wherein the bottom longitudinal wall (15) extends longitudinally in a curved manner so as to form periodic continuous oscillations defining the partial blocking elements (20).

10. Holding plate (10) according to any one of Claims 1 to 9, wherein the transverse recesses (30) of the same separating rib (17) are arranged longitudinally substantially periodically, preferably at half (p/2) the period (p) of longitudinal arrangement of the partial blocking elements (20) of the same distribution channel (13).

11. Holding plate (10) according to Claim 10, wherein the transverse recesses (30) are formed from a bottom surface (31) linked to a substantially flat longitudinal surface (18) by lateral walls, the bottom surface (31) extending along an axis substantially orthogonal to the longitudinal axis of the separating rib (17).
